# EUROPEAN PATENT SPECIFICATION

(11) **EP 0 446 523 B1**
(45) Date of publication and mention of the grant of the patent: **27.09.1995**
(21) Application number: 90313332.0
(22) Date of filing: 07.12.1990
(51) Int. Cl.: H04B 17/00, H04N 17/00

(54) **Determination of dispersion characteristics of a communication channel from a received training sequence processed by correlation and replication**
Ermittlung von Dispersionseigenschaften eines Fernmelde-Übertragungskanals aus einer empfangenen Prüfsequenz nach Korrelation und Vervielfältigung.
Détermination de caractéristiques de dispersion d'un canal de communication à partir d'une séquence de test reçue et traitée par corrélation et répétition

(30) Priority: 13.03.1990 US 493017
(43) Date of publication of application: 18.09.1991
(73) Proprietor: AT&T Corp., New York, NY 10013-2412 (US)
(72) Inventor: Wang, Jin-Der, Ocean, New Jersey 07712 (US)
(74) Representative: Buckley, Christopher Simon Thirsk

(56) References cited:
- EP-A- 0 212 839
- IEEE TRANSACTIONS ON BROADCASTING. vol. 35, no. 4, December 1989, NEW YORK US pages 339 - 347; H.MIYAZAWA: 'DEVELOPMENT OF A GHOST CANCEL REFERENCE SIGNAL FOR TV BROADCASTING'

## Description

This invention relates to a receiver apparatus for use in a communications system where a received signal has passed through a communications medium which may be signal dispersive, to methods of determining at least one characteristic of signal dispersion in a communications system, and to communications systems in which a transmitter and a receiver are separated by a communications medium which may be signal dispersive.

A training sequence is a series of apriori known symbols which are transmitted at predetermined times from a signal transmitter to a signal receiver. Such sequences have long been used to adjust the operation of signal dispersion compensation apparatus in the receiver, such as equalizers, echo cancellers and the like.

Signal dispersion, such as echoes or signal "ghosts", is an inherent problem in communications systems and the severity of the problem can vary with the system application. For example, signal ghosts or echoes frequently exist in conventional television transmission systems which are highly objectional to the viewer and which can render a high definition television (HDTV) signal unintelligible. Accordingly, compensation for signal dispersion is highly desirable in conventional television systems and, indeed, is required in HDTV and in many other communications applications. Moreover, while signal dispersion compensation apparatus, such as equalizers and cancellers, provides satisfactory compensation, knowledge of the signal dispersion characteristics, e.g., amplitude, delay and phase, is useful for the adjustment of such apparatus during system start-up and operation.

Prior art techniques exist which can determine the characteristics of signal dispersion. Such techniques typically transmit specific signals, such as pulses or training sequences, which are detected and analyzed in the receiver. These techniques provide satisfactory estimates of the signal dispersion characteristics in applications wherein the dispersion is large in amplitude and short in duration. However, the prior art techniques provide inaccurate results when the signal dispersion is small in amplitude, particularly in the presence of channel noise, jitter or similar impairments, and provide ambiguous results when the signal dispersion is long in duration. These shortcomings have hindered development of communications systems requiring ever-more precise signal dispersion compensation and more precise determination of the signal dispersion characteristics.

Most recently, as disclosed in a pending U.S. patent application to Chao et al., Serial No. 443,772, filed November 30, 1989 (published under US-A-4 980 767), and assigned to the present assignee, a technique which overcomes the aforesaid problems of the prior art has been developed which transmits two different training sequences wherein each such training sequence includes a different number of symbols. This technique, while providing greater accuracy than those of the previous prior art, requires a time duration for the transmission of the two different training sequences which is not always available. Therefore, a technique which provides greater accuracy in the determination of small-amplitude and long-duration signal dispersion and which requires less time duration would be desirable.

According to a first aspect of this invention there is provided receiver apparatus as claimed in claim 1.

According to a second aspect of this invention there is provided receiver apparatus as claimed in claim 2.

According to a third aspect of this invention there is provided a method as claimed in claim 13.

According to a fourth aspect of this invention there is provided a method as claimed in claim 14.

According to a fifth aspect of this invention there is provided a communications system as claimed in claim 15.

According to a sixth aspect of this invention there is provided a communications system as claimed in claim 16.

The amplitude, phase and delay of signal dispersion may be determined by transmitting a training sequence including a plurality of apriori known symbols and having a time duration at least equal to the expected range of signal dispersion delay. At a receiver, the training sequence is recovered and then processed using correlation and signal replication techniques. This processed training sequence is then utilized to determine at least one of the aforesaid signal dispersion characteristics.

An advantage of the present invention is that it may be applied to a variety of different communications systems and is particularly adaptable for television signal transmission wherein the training sequence can be advantageously transmitted during the vertical blanking interval. Another advantage of the present invention is that it may significantly improve the accuracy of determining the characteristics of signal dispersion when such dispersion is of long duration, has a small amplitude, or is accompanied by channel noise, jitter and similar impairments.

The invention will now be described with reference to the accompanying drawings, in which:
FIGs. 1 and 2 are representations of an illustrative signal format wherein a training sequence is transmitted;
FIG. 3 is a representation of illustrative signals, including signals which precede and succeed the transmission of the training sequence of FIG. 1, utilized by disclosed embodiments of the present invention;
FIG. 4 is a block-schematic diagram representation of an embodiment of a transmitter;
FIGs. 5 and 6 are alternate block-schematic diagram representations of embodiments of a baseband receiver which incorporate the present invention;
FIG. 7 is a representation of an illustrative output signal of the inphase correlator 515 of FIG.5;
FIGs. 8 and 9 are alternate block-schematic diagram representations of embodiments of a passband receiver which incorporate the present invention; and
FIG. 10 is a block-schematic diagram representation of an embodiment of the correlator in FIGs. 5, 6, 8 or 9.

### Detailed Description

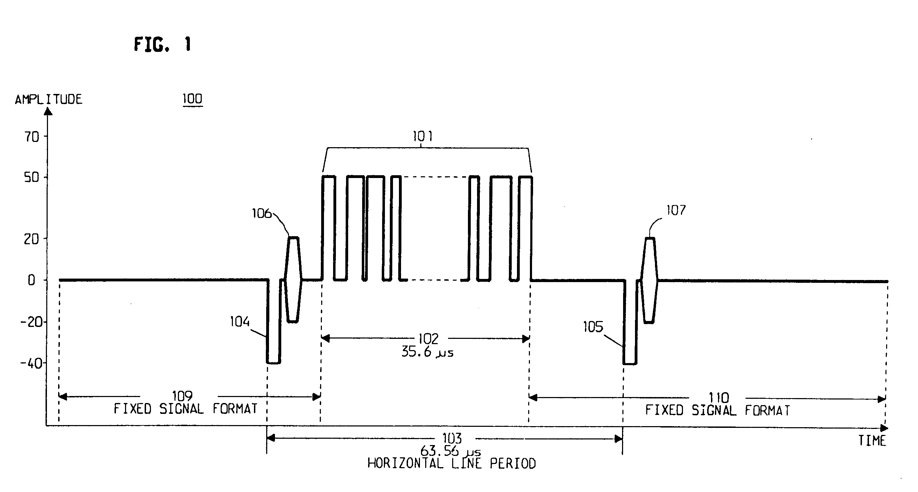

FIG. 1 shows a portion 100 of an illustrative enhanced National Television System Committee (NTSC) television signal format which incorporates a training sequence 101 during time interval 102. At this juncture, it will, of course, be understood that the present invention is not restricted to use in such a television signal format and can be utilized with any television signal format, e.g., Sequence Electronique Couleur Avec Memoire (SECAM), Phase Alternation Line (PAL), and HDTV, as well as signal formats for communications systems other than television transmission. In this illustrative format, sequence 101 includes 255 symbols which are transmitted at a rate of 7.160 x 10⁶ symbols/second so that time interval 102 has a duration of 35.6 x 10⁻⁶ seconds. Preferably, sequence 101 is a pseudorandom sequence. In addition, as shown, sequence 101 is advantageously transmitted during the 63.56 µs horizontal line period 103 which extends between horizontal synchronization pulses 104 and 105. Horizontal period 103 is one of a plurality of line periods in a vertical blanking interval in a video frame. Incorporation of the training sequence in the unused time interval in horizontal line period 103 advantageously does not require any alteration of the television signals transmitted before and after sequence 101. Envelopes 106 and 107 represent the color bursts in an NTSC format which respectively follow pulses 104 and 105. Within intervals 109 and 110, the signals in the NTSC format are known and provide well-known functions unconnected with the present invention. However, as will be discussed hereinbelow, the known nature of the signals in these intervals will be advantageously utilized by the present invention to permit the accurate replication of the transmitted training sequence 101 by a store-and-subtract process. Interval 109 must be at least as long as the maximum delay of any postcursor ghosts and interval 110 must be at least as long as the sum of the maximum postcursor ghost delay and precursor ghost delay. The former delay is typically represented by a positive time value and the latter delay is typically represented by a negative time value. The sum of the maximum postcursor ghost delay and precursor ghost delay time values, ignoring any algebraic sign, is hereinafter referred to as the expected range of signal dispersion delay.

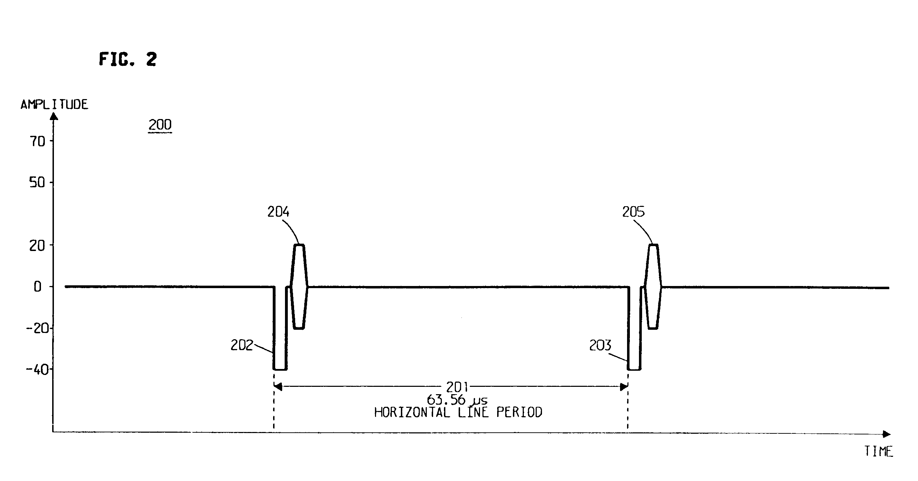

FIG. 2 shows a portion 200 of the illustrative NTSC television signal format wherein portion 200 succeeds portion 100 and includes a horizontal line period 201 within a vertical blanking interval. Horizontal line period 103 is disposed between horizontal synchronization pulses 202 and 203. Envelopes 204 and 205 represent color bursts and are identical to envelopes 106 and 107 of FIG. 1. It should be noted that portions 100 and 200 are identical except that the training sequence 101 is not transmitted during horizontal line period 201.

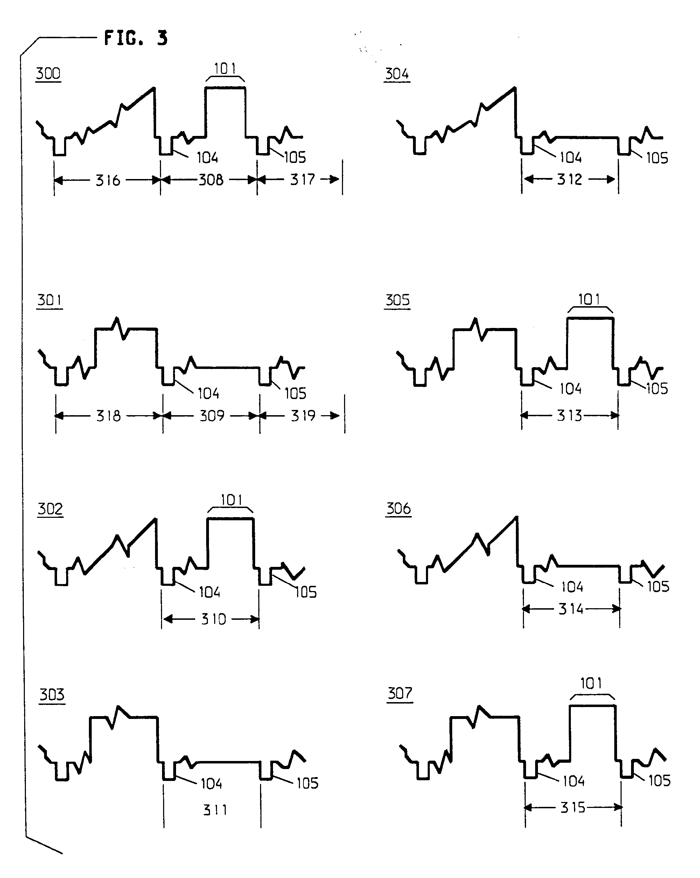

FIG. 3 shows the periodic nature of the transmission of training sequence 101 within eight portions 300-307 of an NTSC television signal format. Each of portions 300 through 307 has the same time duration and respectively includes one horizontal line period 308 through 315 in eight successive vertical blanking intervals. Each such horizontal line period is disposed between a pair of horizontal synchronization pulses 104 and 105.

We shall define the term training sequence period as a time interval within one horizontal line period of each vertical blanking interval. During this training sequence period, either the training sequence 101 or a zero dc signal is transmitted. Accordingly, the designations 308 through 315 in FIG. 3 designate this training sequence period.

It should be noted that in the NTSC signal format, shown in FIG. 3, the signals surrounding any training sequence period are different from those surrounding an immediately following training sequence period. For example, the signals in intervals 316 and 317, which immediately precede and succeed training sequence period 308, are different from those in intervals 318 and 319, which immediately precede and succeed training sequence period 309. Training sequence period 309 occurs during a vertical blanking interval immediately following the vertical blanking interval that includes training sequence period 308. However, the signals surrounding any given training sequence period are identical to those surrounding the fourth next training sequence period after the given training sequence period. In this regard, note that portions 300 and 304 are identical but for the training sequence 101. This identity also exists between portions 301 and 305, portions 302 and 306, and between portions 303 and 307. Accordingly, if the signals in the foregoing paired signal portions were stored and then one stored signal in each pair was subtracted from the other, an accurate replica of the transmitted training sequence could be recovered. For example, training sequence 101 could be recovered in the receiver by subtracting portion 304 from portion 300, subtracting portion 301 from portion 305, subtracting portion 306 from portion 302 and subtracting portion 303 from portion 307. It is this process of pairing the above-described signal portions, each including a training sequence period, which is used in a receiver constructed pursuant to the present invention.

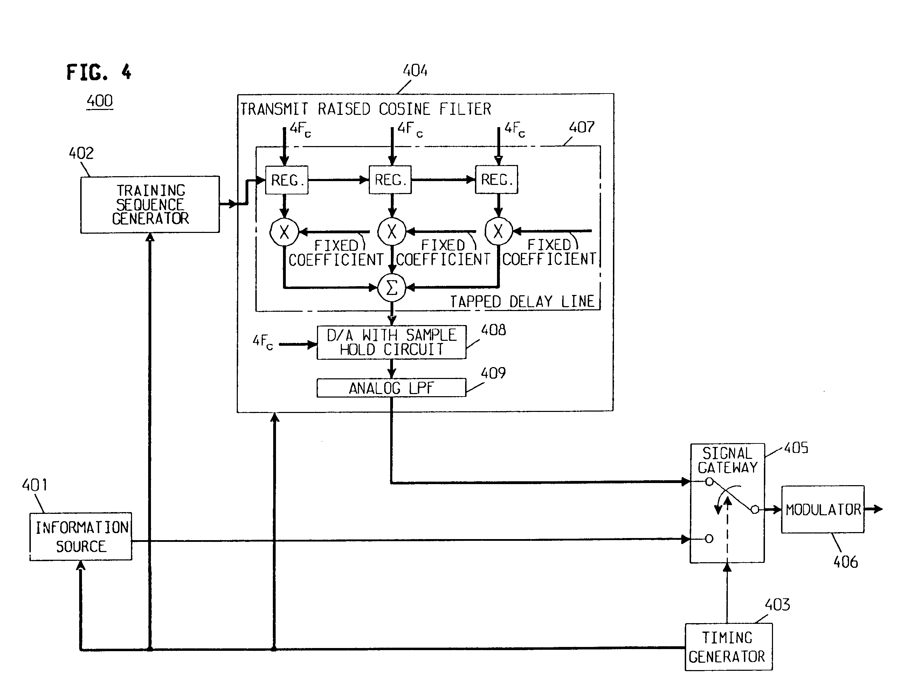

Refer now to FIG. 4 which shows a transmitter 400. The transmitted information signal, which in the illustrative embodiment is a conventional NTSC formatted signal, is generated by information source 401. This signal is then coupled to signal gateway 405 under the control of timing signals from timing generator 403. Training sequence generator 402 generates training sequence 101 within horizontal line periods 308, 310, 313 and 315 under the control of timing signals from timing signal generator 403 and couples these sequences to signal gateway 405. Advantageously, each of these pseudorandom sequences is spectrally shaped by raised cosine transmit filter 404 before being coupled to signal gateway 405. Gateway 405, illustratively represented by a single-pole, multi-throw switch, selectively couples the signals from source 401 or generator 402 to modulator 406 which provides vestigial sideband (VSB) amplitude modulation in the illustrative NTSC television application, or quadrature amplitude modulation (QAM) in other communication systems.

The transmit filter 404 advantageously includes tapped delay line 407, digital-to-analog (D/A) converter with a sample hold circuit 408 and an analog low-pass filter (LPF) 409 connected in series. Tapped delay line 407 and D/A converter 408 are clocked at four times the symbol rate (F_{c}). Analog LPF 409 advantageously eliminates out-of-band signal energy.

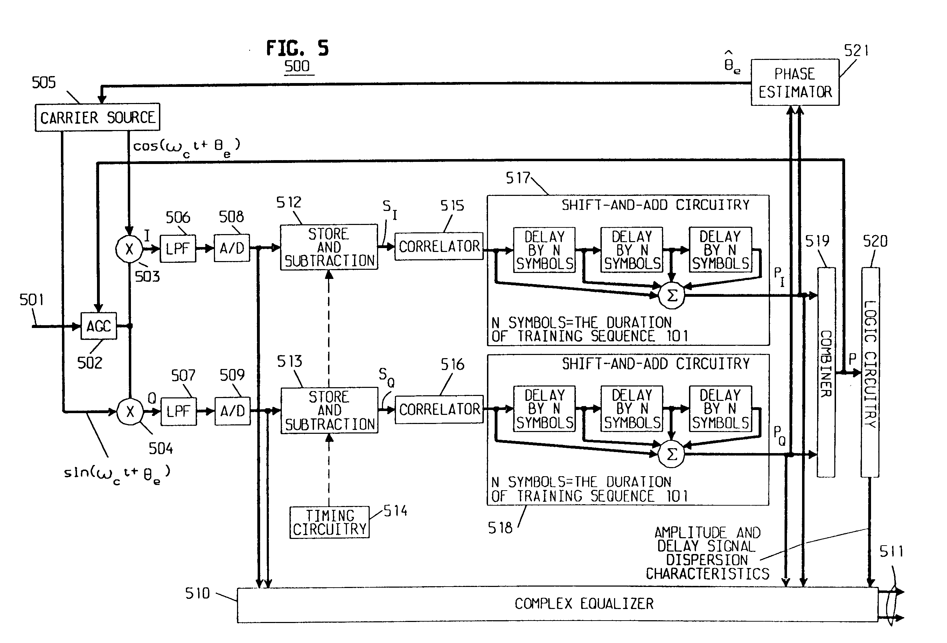

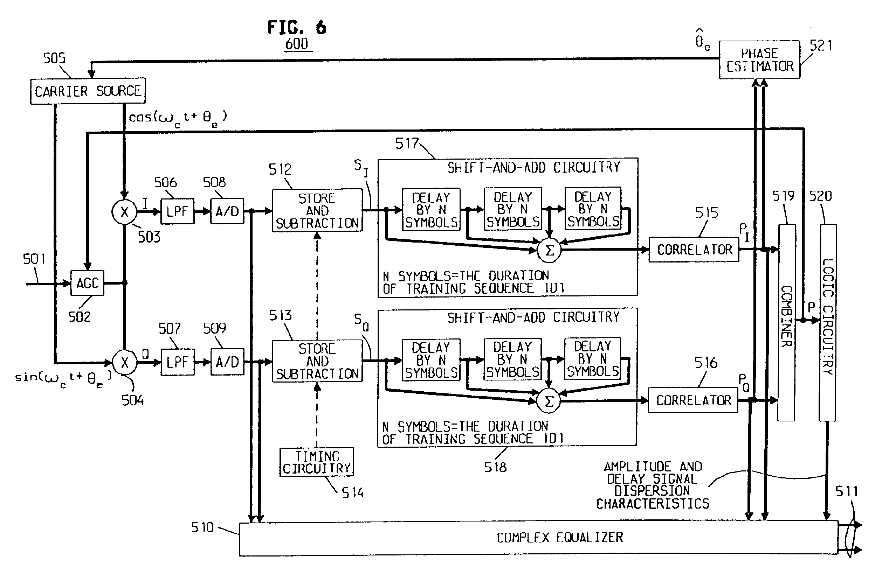

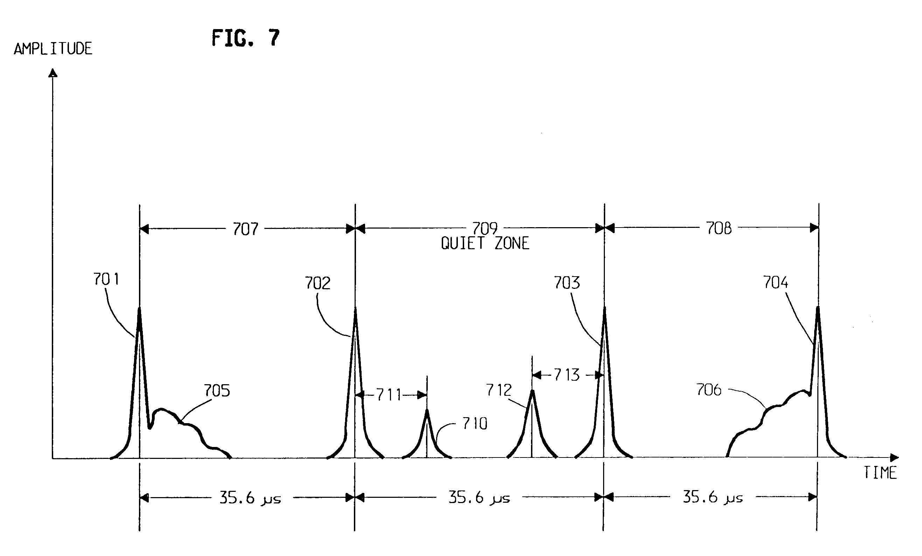

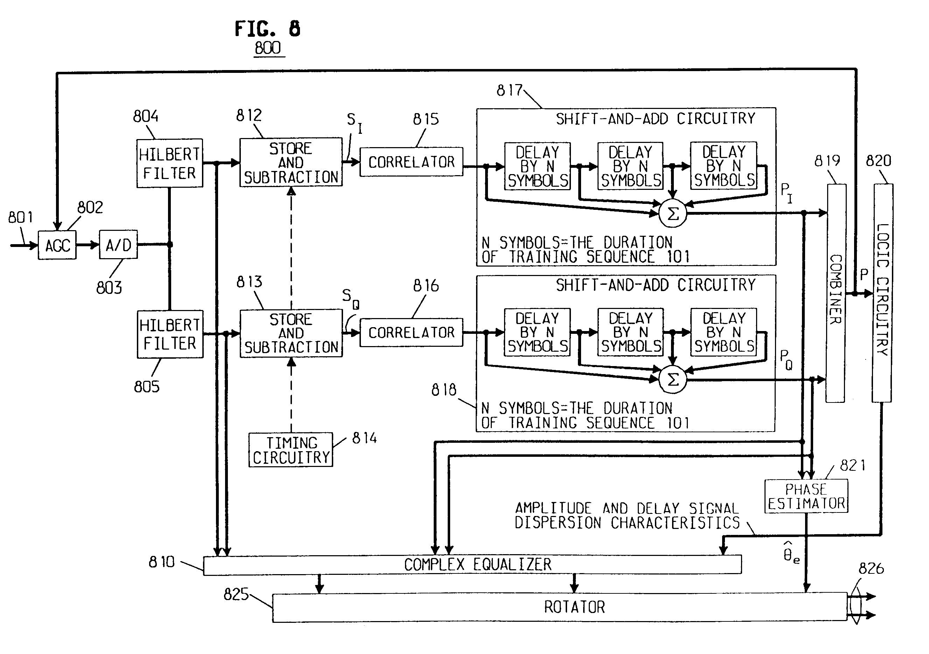

FIGs. 5 and 6 respectively show alternate embodiments of a baseband receiver 500 and 600 which incorporate the present invention. As shown in FIG. 5, the received modulated signal incorporating training sequence 101 is coupled via lead 501 through automatic gain control (AGC) circuit 502 to demodulators 503 and 504. Each demodulator multiplies the received signal by carrier signals generated by carrier source 505. One of these carrier signals is represented by cos (ω_{ct} + ϑₑ) while the other is represented by sin (ω_{ct} + ϑₑ), where ω_{c}, is the carrier frequency used in the transmitter modulator of FIG. 4 and ϑₑ is the phase angle between the carrier signals supplied by carrier source 504 and those utilized by the transmitter modulator.

Each demodulator output is coupled through low-pass filters (LPF) 506 and 507 to analog-to-digital converters (A/D) 508 and 509. The digital outputs of these converters are supplied to a complex equalizer 510, which removes distortion in the received signal so as to accurately recover the transmitted information signal and provide a pair of output signals 511 for further conventional television processing. The term "complex", with reference to equalizer 510, refers to the fact that this equalizer utilizes coefficients which are complex numbers, i.e., they have a real and an imaginary component. The digital outputs of converters 508 and 509 are also coupled to store-and-subtraction circuits 512 and 513.

The function of store-and-subtraction circuits 512 and 513 is to recover the training sequence 101 from the received signal by storing the paired waveforms of FIG. 3, i.e., 300 and 304, 301 and 305, 302 and 306, and 303 and 307, and then subtracting one waveform in each pair from the other. To extract the incoming signal waveform at the appropriate time so as to recover each of these paired waveforms, circuits 512 and 513 are periodically enabled by timing circuitry 514. The recovered training sequences recovered by circuits 512 and 513 are respectively designated as S_{I} and S_{Q}.

Correlators 515 and 516 are designed to produce an output pulse upon detecting the training sequence. These output pulses, along with the correlator output at other times, are replicated three times within shift-and-add circuitry 517 and 518 at a spacing equal to the length of training sequence. The correlator output pulses and their replications at the training sequence duration produces signals P_{I} and P_{Q}. Combiner 519 receives the signals P_{I} and P_{Q} and produces the sum of the square of these signals. This sum is designated as P. Logic circuitry 520 determines the amplitude and delay characteristics of the signal dispersion in response to signal P.

It should be noted that the use of the shift-and-add circuitry has the effect of advantageously reproducing the correlator output pulses as if training sequence 101 were transmitted four times in succession. While this could be done, such successive transmission of the training sequence whose duration is at least equal to the range of signal dispersion delay can require a greater time duration than is available. This is particularly true in the case of a conventionally transmitted television signal, such as NTSC, PAL or SECAM wherein the intervals not used for other signal transmission are not long enough for such successive training sequence transmission.

While the amplitude and delay characteristics determined by logic circuitry 520 can be made using only a single correlator, e.g., correlator 515 and its associated single shift-and-add circuit 517, and, therefore, use of correlator 516, shift-and-add circuitry 518 and combiner 519 can be eliminated, the use of both correlators and the combiner advantageously provides a mechanism for adjusting the carrier phase produced by carrier source 505 and the automatic gain control provided by AGC circuit 502. In addition, use of both signals P_{I} and P_{Q} allows the estimation of ghost characteristics while carrier phase adjustment is still taking place.

Estimation of the correct carrier phase can be determined by using P_{I} and P_{Q} by well-known means within phase estimator 521 which approximate the arc tangent of P_{Q}/P_{I}. Adjustment of the carrier phase can then be readily provided by coupling the estimated carrier phase, designated as ϑ̂ₑ, appearing at the output of the phase estimator to carrier source 505. Similarly, by using the signal P, it is well-known that the amplitude of the received signal can be estimated so as to correct the gain of the receiver. In FIG. 5, signal P is coupled to AGC circuit 502 to provide this gain adjustment.

The amplitude and delay characteristics provided by logic circuitry 520 along with signals P_{I} and P_{Q} are coupled to complex equalizer 510 wherein they are used to adjust the operation thereof. Specifically, in well-known fashion, the amplitude and delay characteristics are used to determine which equalizer coefficients are non-zero and signals P_{I} and P_{Q} are used to adjust the values of these non-zero coefficients.

The receiver embodiment shown in FIG. 6 is identical in function and operation to that already described in reference to FIG. 5 except that the serial connection of the correlators and shift-and-add circuitry is reversed. As a result, the training sequences are replicated in FIG. 6 as opposed to replicating the correlator output in FIG. 5. This reversal is equivalent.

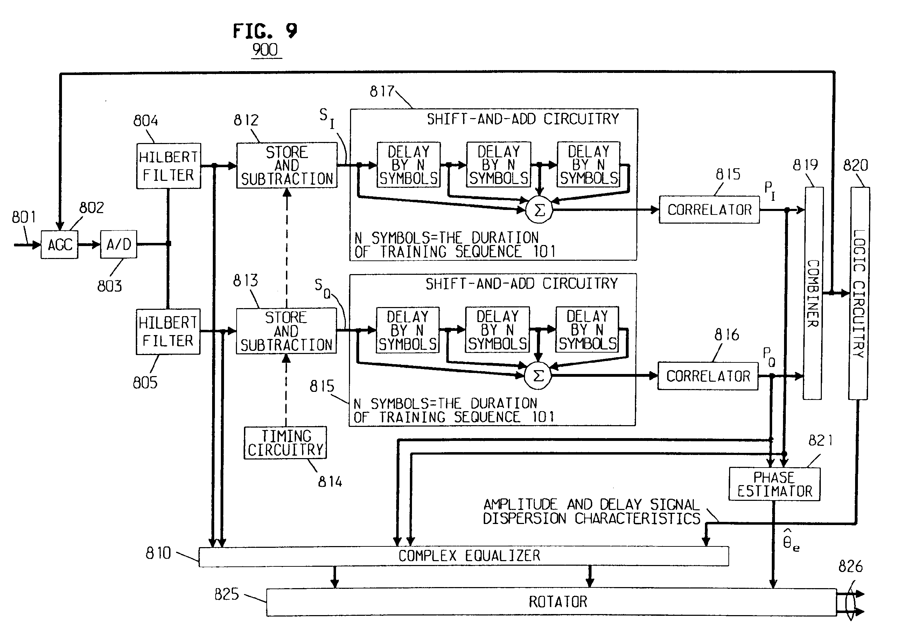

An illustrative output of the inphase shift-and-add circuitry 517 of FIG. 5, designated as P_{I}, is shown in FIG. 7. The output of the quadrature shift-and-add circuitry 518 and designated as P_{Q} is related to P_{I} by a function of the phase shift of the communications medium through which the received signal has propagated. As is well known, a correlator is designed to provide a large amplitude output pulse upon detecting a training sequence. At other times, the correlator output may be ambiguous and the correlator output amplitude is substantially less than when the training sequence is detected.

Signal P_{I} includes four signal peaks 701 through 704 wherein each peak represents a training sequence or its replicas generated by shift-and-add circuitry of FIG. 5. These peaks are spaced apart by 35.6 µs time intervals. It should be noted that the intervals between peaks 701 and 702 and between peaks 703 and 704 are respectively corrupted by incompletely correlated postcursor and precursor ghosts of the training sequence. These incompletely correlated postcursor and precursor ghosts are respectively represented by waveforms 705 and 706. The presence of such incompletely correlated ghosts lessens the ability to clearly discern ghost characteristics in those portions of intervals 707 and 708 containing waveforms 705 and 706. However, either one of these intervals could be used to determine signal dispersion characteristics and, consequently, the shift-and-add circuitry in the receiver need only provide at least one replica of its input. It is however, advantageous, for such circuitry to provide three replicas of its input signal so as to provide the four illustrated peaks 701 through 704 and thereby provide buffer intervals 707 and 708 for an innermost interval 709, designated as a "quiet zone". Such buffer intervals sufficiently separate quiet zone 709 in time from incompletely correlated ghosts so that it is devoid of all ghost signals except those of the transmitted training sequence that undergo full correlation. Such ghosts can be either postcursor ghosts, i.e., they are received after the training sequence, or precursor ghosts, i.e., they arrive at the receiver prior to the transmitted training sequence. FIG. 7 depicts one such postcursor ghost as signal peak 710 which is located at a time interval 711 following peak 702 and one precursor ghost by peak 712 which is located at a time interval 713 preceding peak 703. Accordingly, the methodology used and provided within logic circuitry 519 is to determine the amplitude of any ghost by using amplitude comparators which determine the presence of any signals in the quiet zone above a predetermined level and the magnitude of such signals. The delay of any such ghost is then determined by the location of any detected signal above this threshold relative to peaks 702 or 703. Note that there is virtually no ambiguity in discerning between postcursor and precursor ghosts as the duration of quiet zone 709 extends for at least the range extending from the maximum delayed precursor ghost, typically designated by a negative time value, to the maximum delayed postcursor ghost, which is typically designated by a positive time value.

FIGs. 8 and 9 show alternate embodiments of a passband receiver which incorporate the present invention. In these receivers the received QAM signal on lead 801 is coupled through AGC circuitry 802 to A/D converter 803 and thence to passband Hilbert filter pair 804 and 805. Filters 804 and 805 provide outputs which are coupled to complex equalizer 810 and to store-and-subtraction circuits 812 and 813. The outputs of complex equalizer 810 are connected to rotator 825 to produce the transmitted information signals on outputs 826. The operation of store-and-subtraction circuitry 812 and 813, correlators 815 and 816, shift-and-add circuitry 817 and 818, combiner 819, logic circuitry 820 and phase estimator 821 are functional equivalents to their counterparts in the baseband receiver. FIG. 9 is similar in operation to FIG. 8 but for the reversal in the series connection of shift-and-add circuitry 817 and 818 and correlators 815 and 816.

In FIGs. 5, 6, 8 and 9, it is preferable that the correlator filter coefficients be binary numbers corresponding to those in the training sequence since such coefficients can have only one of two values, such as +1 and -1, and implementation is thereby simplified. However, the use of such binary coefficients in both the correlator and the transmitter training sequence generator can produce dc bias in the quiet zones. Such dc bias, which is inherent due to the autocorrelation nature of a pseudorandom sequence, can be eliminated using well-known techniques. For example, in one such technique the dc bias can be measured and then subtracted from P_{I} and P_{Q} or from the signal combiner output signal P. In another technique, the dc bias can be eliminated by passing P_{I} and P_{Q} or P through a properly chosen dc blocking filter (not shown), such as those which subtract a delayed version of the signal from the signal itself.

A modified pseudorandom sequence can be transmitted in lieu of a pseudorandom sequence. In a modified pseudorandom sequence, a dc constant is added to each symbol of a pseudorandom sequence so that the transmitted symbols are either zero or a positive value rather than the equal positive or negative values of the original pseudorandom sequence. The advantage of using a modified pseudorandom sequence is that, unlike the original pseudorandom sequence, there is no dc bias in any quiet zone at the output of a correlator. Accordingly, it is preferable to utilize both binary correlators and modified pseudorandom training sequences in the preferred embodiment of the present invention. For another arrangement, a pseudorandom sequence having +1 and -1 symbol values is transmitted and the coefficients of the binary correlator take values of either +1 or 0 instead of the +1 and -1 values.

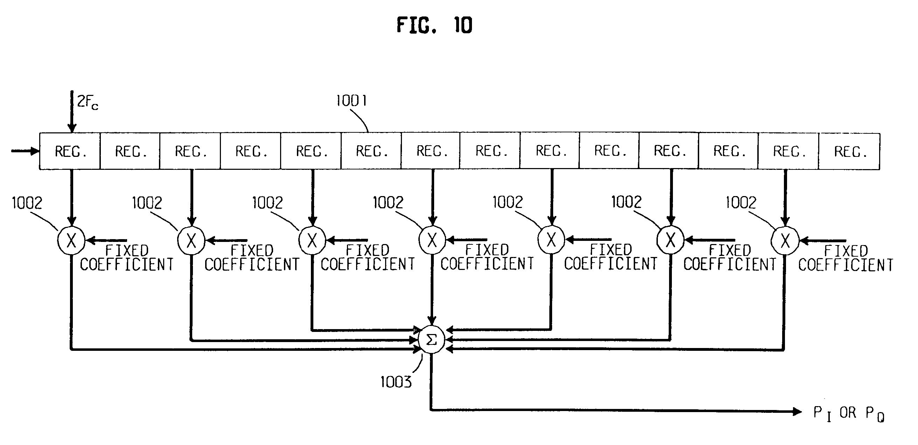

In FIGs. 5, 6, 8 and 9, it is advantageous for A/D converter 508, store-and-subtract 512, correlator 515, and shift-and-add circuitry 517 to operate at a rate which is a multiple, n, of the symbol rate, where n is an integer > 1, in order to provide higher resolution of the signal dispersion delay. With such an arrangement, it is preferable to implement the correlator as shown in FIG. 10. As illustrated in FIG. 10, the correlator, e.g., 515 , is implemented by utilizing a tapped delay line 1001, clocked at twice the symbol rate, 2F_{c}, multipliers 1002 and summer 1003. Each multiplier utilizes a fixed correlation coefficient which multiplies the symbol value stored in one of the taps of delay line 1001. The delay line taps which are combined by summer 1003 are spaced apart by the symbol rate. The intermediate taps are not associated with a multiplier and therefore are not inputted to summer 1003. In the preferred embodiments, where a binary correlator is utilized, the correlation coefficients are either +1, -1 or +1, 0. With such coefficients, the multipliers 1002 can be realized by pass through elements for a +1 multiplication, sign inversion elements for a -1 multiplication, and signal blocking elements for a 0 multiplication.

It should, of course, be understood that while the present invention has been disclosed in reference to specific embodiments, numerous other arrangements should be apparent to those of ordinary skill in the art. For example, while the present invention has been disclosed in reference to a VSB or QAM signal, the invention is applicable to any analog or digital communication system regardless of the presence, absence or type of modulation. In addition, the present apparatuses and methods are not limited to pseudorandom or modified pseudorandom training sequences and, indeed, can employ any type of training sequence. Furthermore, the complex equalizer shown in FIGs. 5, 6, 8 and 9 can be positioned so that its outputs are coupled to each correlator input. In such an arrangement, the equalizer serves as a unit impulse fixed filter during system initialization and serves as an adaptive equalizer thereafter.

## Claims

1. Receiver apparatus for use in a communications system wherein any received signal has propagated through a communications medium in which signal dispersion may be present, wherein said receiver apparatus is CHARACTERIZED BY means for correlating (515) a received training sequence including a plurality of predetermined symbols occurring at a predetermined symbol rate, and for providing a correlated training sequence; means for replicating (517) the correlated training sequence at least once, to provide a processed training sequence representative of the sum of the correlated training sequence and the at least one replication, and means (519,520,521) responsive to the processed training sequence for determining at least one characteristic of said signal dispersion.

2. Receiver apparatus for use in a communications system wherein any received signal has propagated through a communications medium in which signal dispersion may be present, wherein said receiver apparatus is CHARACTERIZED BY means (517) for replicating a received training sequence at least one time, and for providing a summation signal representation of the sum of the received training sequence and the at least one replication, means (515) for correlating the summation signal for providing a processed training sequence, and means (520) responsive to the processed training sequence for determining at least one characteristic of said signal dispersion.

3. Apparatus as claimed in claim 1 or 2 wherein said correlating means (515) serves to provide correlation using a clock signal which is n times said predetermined symbol rate, where n is an integer > 1.

4. Apparatus as claimed in claim 1 or 2 capable of processing a pseudorandom sequence as said training sequence.

5. Apparatus as claimed in claim 1 or 2 wherein said correlating means serves to correlate using a predetermined set of coefficients.

6. Apparatus as claimed in claim 5 wherein each coefficient in said predetermined set of coefficients is a binary number.

7. Apparatus as claimed in claim 6 wherein the binary numbers forming said set have equal absolute values different from zero.

8. Apparatus as claimed in claim 6 wherein the binary numbers forming said set have values which are exclusively selected from zero and one non-zero number.

9. Apparatus as claimed in claim 1 or 2 including a source (505) of at least one carrier signal used for separating the received training sequence into an inphase component and a quadrature component,
said means for replicating (517) and said means for correlating (515) being comprised in a first branch for processing said inphase component, the apparatus further comprising a second branch (518,516) corresponding to said first branch for processing said quadrature component, said determining means (519,520,521) being coupled to the outputs of said first and second branches and serving to determine the phase characteristic of said signal dispersion and to control said carrier signal source.

10. Apparatus as claimed in claim 1 or 2 including an equalizer (510), and wherein said determining means serves to adjust the operation of said equalizer.

11. Apparatus as claimed in claim 1 or 2 wherein said determining means serves to determine the amplitude and delay characteristics of said signal dispersion.

12. Apparatus as claimed in claim 1 or 2 including an automatic gain control circuit (502) through which said received training sequence is coupled, and wherein said determining means includes means for controlling the gain of said automatic gain control circuit.

13. A method of determining at least one characteristic of signal dispersion in a communications system wherein said signal dispersion has an expected range of delay, said method being CHARACTERIZED BY the steps of generating a training sequence, said training sequence including a number of predetermined symbols and having a duration at least equal to said range of delay, transmitting said training sequence in an associated time interval, receiving said training sequence, correlating the received training sequence to provide a correlated training sequence, replicating the correlated training sequence at least once to provide a processed training sequence representative of the sum of the correlated training sequence and the at least one replication, and determining at least one characteristic of said signal dispersion in response to said processed training sequence.

14. A method of determining at least one characteristic of signal dispersion in a communications system wherein said signal dispersion has an expected range of delay, said method being CHARACTERIZED BY the steps of generating a training sequence, said training sequence including a number of predetermined symbols and having a duration at least equal to said range of delay, transmitting said training sequence in an associated time interval, receiving said training sequence, replicating the received training sequence at least one time to provide a summation signal representative of the sum of the received training sequence and the at least one replication, correlating the summation signal to provide a processed training signal, and determining at least one characteristic of said signal dispersion in response to said processed training sequence.

15. A communications system including a transmitter and a receiver which are separated by a communications medium in which signal dispersion having an expected range of delay may be present, CHARACTERIZED IN THAT said transmitter includes means (402) for generating a training sequence, said training sequence including a number of predetermined symbols and having a duration at least equal to said range of delay, and means (403,405,406) for transmitting said training sequence in an associated time interval, and said receiver includes means for correlating (515) a received training sequence including a plurality of predetermined symbols occurring at a predetermined symbol rate, and for providing a correlated training sequence, means for replicating (517) the correlated training sequence at least once, to provide a processed training sequence representative of the sum of the correlated training sequence and the at least one replication, and means (519,520,521) responsive to the processed training sequence for determining at least one characteristic of said signal dispersion.

16. A communications system comprising a transmitter and a receiver which are separated by a communications medium in which signal dispersion having an expected range of delay may be present CHARACTERIZED IN THAT said transmitter includes means (402) for generating a training sequence, said training sequence including a number of predetermined symbols and having a duration at least equal to said range of delay, and means (403,405,406) for transmitting said training sequence in an associated time interval, and said receiver includes means (517) for replicating a received training sequence at least one time, and for providing a summation signal representation of the sum of the received training sequence and the at least one replication, means (515) for correlating the summation signal for providing a processed training sequence, and means (519,520,521) responsive to the processed training sequence for determining at least one characteristic of said signal dispersion.

## Patentansprüche

1. Empfänger zur Verwendung in einem Kommunikationssystem, bei dem jedes empfangene Signal ein Kommunikationsmedium durchlaufen hat, in welchem eine Signaldispersion auftreten kann,
gekennzeichnet durch
eine Einrichtung (515) zur Korrelation einer empfangenen Übungsfolge einschließlich einer Vielzahl von vorbestimmten, mit einer vorbestimmten Symbolrate auftretenden Symbolen und zur Bereitstellung einer korrelierten Übungsfolge,
eine Einrichtung (517) zur wenigstens einmaligen Reproduktion der korrelierten Übungsfolge, um eine verarbeitete Übungsfolge bereitzustellen, die die Summe der korrelierten Übungsfolge und der wenigstens einen Reproduktion darstellt, und
eine Einrichtung (519, 520, 521), die unter Ansprechen auf die verarbeitete Übungsfolge wenigstens eine Eigenschaft der Signaldispersion feststellt.

2. Empfänger zur Verwendung in einem Kommunikationssystem, bei dem jedes empfangene Signal ein Kommunikationsmedium durchlaufen hat, in welchem eine Signaldispersion auftreten kann,
gekennzeichnet durch
eine Einrichtung (517) zur wenigstens einmaligen Vervielfältigung einer empfangenen Übungsfolge und zur Bereitstellung einer summierten Signaldarstellung für die Summe der empfangenen Übungsfolge und der wenigstens einen Vervielfältigung,
eine Einrichtung (515) zur Korrelation des summierten Signals, um eine verarbeitete Übungsfolge bereitzustellen, und
eine Einrichtung (520), die unter Ansprechen auf die verarbeitete Übungsfolge wenigstens eine Eigenschaft der Signaldispersion feststellt.

3. Empfänger nach Anspruch 1 oder 2, bei dem die Korreliereinrichtung (515) eine Korrelation unter Verwendung eines Taktsignals bereitstellt, das das n-fache der vorbestimmten Symbolrate ist, wobei n eine ganze Zahl > 1 ist.

4. Empfänger nach Anspruch 1 oder 2, der eine Pseudozufallsfolge als Übungsfolge verarbeiten kann.

5. Empfänger nach Anspruch 1 oder 2, bei dem die Korreliereinrichtung eine Korrelation unter Verwendung eines vorbestimmten Satzes von Koeffizienten durchführt.

6. Empfänger nach Anspruch 5, bei dem jeder Koeffizient in dem vorbestimmten Satz von Koeffizienten eine Binärzahl ist.

7. Empfänger nach Anspruch 6, bei dem die den Satz von Koeffizienten bildenden Binärzahlen von Null verschiedene, gleiche absolute Werte haben.

8. Empfänger nach Anspruch 6, bei dem die den Satz von Koeffizienten bildenden Binärzahlen Werte besitzen, die ausschließlich aus dem Wert Null und einer von Null verschiedenen Zahl gewählt sind.

9. Empfänger nach Anspruch 1 oder 2 mit einer Quelle (505) für wenigstens ein Trägersignal, das zur Auftrennung der empfangenen Übungsfolge in eine Inphase-Komponente und eine Quadraturkomponente verwendet wird, wobei die Vervielfältigungseinrichtung (517) und die Korrelationseinrichtung (515) in einen ersten Zweig zur Verarbeitung der Inphase-Komponente eingefügt sind, der Empfänger ferner einen zweiten, dem ersten Zweig entsprechenden Zweig (518, 516) zur Verarbeitung der Quadraturkomponente aufweist und die Feststelleinrichtung (519, 520, 521) mit dem Ausgang des ersten und des zweiten Zweiges verbunden ist und die Phaseneigenschaften der Signaldispersion feststellt und die Trägersignalquelle steuert.

10. Empfänger nach Anspruch 1 oder 2 mit einem Dämpfungsentzerrer (510), wobei die Feststelleinrichtung zur Einstellung des Dämpfungsentzerrers dient.

11. Empfänger nach Anspruch 1 oder 2, bei dem die Feststelleinrichtung die Amplituden- und Verzögerungseigenschaft der Signaldispersion feststellt.

12. Empfänger nach Anspruch 1 oder 2 mit einer automatischen Verstärkungssteuerschaltung (510), über die die empfangene Obungsfolge geführt wird, wobei die Feststelleinrichtung eine Einrichtung zur Steuerung der Verstärkung der automatischen Verstärkungssteuereinrichtung enthält.

13. Verfahren zur Feststellung wenigstens einer Eigenschaft einer Signaldispersion in einem Kommunikationssystem, wobei die Signaldispersion einen erwarteten Verzögerungsbereich besitzt, gekennzeichnet durch die Verfahrensschritte:
Erzeugen einer Übungsfolge, die eine Anzahl vorbestimmter Symbole und eine Dauer besitzt, die wenigstens gleich dem Verzögerungsbereich ist, Aussenden der Übungsfolge in einem zugeordneten Zeitintervall,
Empfangen der Übungsfolge,
Korrelieren der empfangenen Übungsfolge zur Lieferung einer korrelierten Übungsfolge,
wenigstens einmaliges Vervielfältigen der korrelierten Übungsfolge zur Lieferung einer verarbeiteten Übungsfolge, die die Summe der korrelierten Übungsfolge und der wenigstens einmaligen Vervielfältigung darstellt, und
Feststellen wenigstens einer Eigenschaft der Signaldispersion unter Ansprechen auf die verarbeitete Übungsfolge.

14. Verfahren zum Feststellen wenigstens einer Eigenschaft einer Signaldispersion in einem Kommunikationssystem, bei dem die Signaldispersion einen erwarteten Verzögerungsbereich besitzt, gekennzeichnet durch die Verfahrensschritte:
Erzeugen einer Übungsfolge, die eine Anzahl von vorbestimmten Symbolen und eine Dauer besitzt, die wenigstens gleich dem Verzögerungsbereich ist,
Aussenden der Übungsfolge in einem zugeordneten Zeitintervall, Empfangen der Übungsfolge,
wenigstens einmaliges Vervielfältigen der empfangenen Übungsfolge zur Bereitstellung eines summierten Signals, das die Summe der empfangenen Übungsfolge und der wenigstens einen Vervielfältigung darstellt, Korrelieren des summierten Signals zur Bereitstellung eines verarbeiteten Übungssignals und
Bestimmen wenigstens einer Eigenschaft der Signaldispersion unter Ansprechen auf die verarbeitete Übungsfolge.

15. Kommunikationssystem mit einem Sender und einem Empfänger, die durch ein Kommunikationsmedium getrennt sind, auf welchem eine Signaldispersion mit einem erwarteten Verzögerungsbereich auftreten kann,
dadurch gekennzeichnet, daß der Sender eine Einrichtung (402) zur Erzeugung einer Übungsfolge aufweist, die eine Anzahl von vorbestimmten Symbolen und eine Dauer besitzt, die wenigstens gleich dem Verzögerungsbereich ist, und eine Einrichtung (403, 405, 406) zur Übertragung der Übungsfolge in einem zugeordneten Zeitintervall, und daß der Empfänger eine Einrichtung (515) zur Korrelation einer empfangenen Übungsfolge mit einer Vielzahl von vorbestimmten Symbolen aufweist, die mit einer vorbestimmten Symbolrate auftreten, und zur Bereitstellung einer korrelierten Übungsfolge, ferner eine Einrichtung (517) zur wenigstens einmaligen Vervielfältigung der korrelierten Übungsfolge, um eine verarbeitete Übungsfolge bereitzustellen, die die Summe der korrelierten Übungsfolge und der wenigstens einmaligen Vervielfältigung darstellt und eine Einrichtung (519, 520, 521), die unter Ansprechen auf die verarbeitete Übungsfolge wenigstens eine Eigenschaft der Signaldispersion feststellt.

16. Kommunikationssystem mit einem Sender und einem Empfänger, die durch ein Kommunikationsmedium getrennt sind, auf welchem eine Signaldispersion mit einem erwarteten Verzögerungsbereich auftreten kann,
dadurch gekennzeichnet, daß
der Sender eine Einrichtung (402) zur Erzeugung einer Übungsfolge aufweist, die eine Anzahl von vorbestimmten Symbolen und eine Dauer aufweist, die wenigstens gleich dem Verzögerungsbereich ist, und eine Einrichtung (403, 405, 406) zur Übertragung der Übungsfolge in einem zugeordneten Zeitintervall, und
daß der Empfänger eine Einrichtung (517) zur wenigstens einmaligen Vervielfältigung einer empfangenen Übungsfolge und zur Bereitstellung eines summierten Signals aufweist, das die Summe der empfangenen Übungsfolge und der wenigstens einmaligen Vervielfältigung darstellt, ferner eine Einrichtung (515) zur Korrelation des summierten Signals und zur Bereitstellung einer verarbeiteten Übungsfolge und eine Einrichtung (519, 520, 521), die unter Ansprechen auf die verarbeitete Übungsfolge wenigstens eine Eigenschaft der Signaldispersion feststellt.

## Revendications

1. Appareil récepteur pour utilisation dans un système de communications dans lequel tout signal reçu s'est propagé à travers un véhicule de communications dans lequel une dispersion de signal peut être présente, dans lequel ledit appareil récepteur est **CARACTERISE PAR** un moyen (515) pour mettre en corrélation une séquence de test reçue incluant une pluralité de symboles prédéterminés survenant à un taux prédéterminé de symbole et pour fournir une séquence de test en corrélation ; un moyen (517) pour répéter au moins une fois la séquence de test en corrélation, pour fournir une séquence de test traitée représentative de la somme de la séquence de test en corrélation et de la au moins une répétition, et un moyen (519, 520, 521) sensible à la séquence de test traitée pour déterminer au moins une caractéristique de ladite dispersion de signal.

2. Appareil récepteur pour utilisation dans un système de communications dans lequel tout signal reçu s'est propagé à travers un véhicule de communications dans lequel une dispersion de signal peut être présente, dans lequel ledit appareil récepteur est **CARACTERISE PAR** un moyen (517) pour répéter au moins une fois une séquence de test reçue, et pour fournir une représentation de signal de sommation de la somme de la séquence de test reçue et de la au moins une répétition, un moyen (515) pour mettre en corrélation le signal de sommation pour fournir une séquence de test traitée, et un moyen (520) sensible à la séquence de test traitée pour déterminer au moins une caractéristique de ladite dispersion de signal.

3. Appareil tel que revendiqué dans la revendication 1 ou 2 dans lequel ledit moyen de corrélation (515) sert à fournir la corrélation en utilisant un signal d'horloge qui est n fois ledit taux de symbole prédéterminé, où n est un nombre entier > 1.

4. Appareil tel que revendiqué dans la revendication 1 ou 2 capable de traiter une séquence pseudo-irrégulière, en tant que dite séquence de test.

5. Appareil tel que revendiqué dans la revendication 1 ou 2 dans lequel ledit moyen de corrélation sert à effectuer la corrélation en utilisant une série prédéterminée de coefficients.

6. Appareil tel que revendiqué dans la revendication 5 dans lequel chaque coefficient dans ladite série prédéterminée de coefficients est un nombre binaire.

7. Appareil tel que revendiqué dans la revendication 6 dans lequel les nombres binaires formant ladite série ont des valeurs absolues égales, différentes de zéro.

8. Appareil tel que revendiqué dans la revendication 6 dans lequel les nombres binaires formant ladite série ont des valeurs qui sont exclusivement choisies parmi zéro et un nombre différent de zéro.

9. Appareil tel que revendiqué dans la revendication 1 ou 2 incluant une source (505) d'au moins un signal porteur utilisé pour séparer la séquence de test reçue en une composante en phase et une composante en quadrature,
ledit moyen de répétition (517) et ledit moyen de corrélation (515) étant compris dans une première branche pour traiter ladite composante en phase,
l'appareil comprenant de plus une deuxième branche (518, 516) correspondant à ladite première branche pour traiter ladite composante en quadrature,
ledit moyen de détermination (519, 520, 521) étant accouplé aux sorties desdites première et deuxième branches et servant à déterminer la caractéristique de phase de ladite dispersion de signal et à commander ladite source de signal porteur.

10. Appareil tel que revendiqué dans la revendication 1 ou 2 incluant un égaliseur (510), et dans lequel ledit moyen de détermination sert à régler le fonctionnement dudit égaliseur.

11. Appareil tel que revendiqué dans la revendication 1 ou 2 dans lequel ledit moyen de détermination sert à déterminer les caractéristiques d'amplitude et de retard de ladite dispersion de signal.

12. Appareil tel que revendiqué dans la revendication 1 ou 2 incluant un circuit de contrôle automatique de gain (502) à travers lequel ladite séquence de test reçue est accouplée, et dans lequel ledit moyen de détermination inclut un moyen pour contrôler le gain dudit circuit de contrôle automatique de gain.

13. Méthode de détermination d'au moins une caractéristique de dispersion de signal dans un système de communications dans lequel ladite dispersion de signal a une gamme prévisible de retard, ladite méthode étant **CARACTERISEE PAR** les étapes consistant à générer une séquence de test, ladite séquence de test incluant un certain nombre de symboles prédéterminés et ayant une durée au moins égale à ladite gamme de retard, transmettre ladite séquence de test dans un intervalle de temps associé, recevoir ladite séquence de test, mettre en corrélation la séquence de test reçue pour fournir une séquence de test en corrélation, répéter au moins une fois la séquence de test en corrélation pour fournir une séquence de test traitée représentative de la somme de la séquence de test en corrélation et de la au moins une répétition, et déterminer au moins une caractéristique de ladite dispersion de signal en réponse à ladite séquence de test traitée.

14. Méthode de détermination d'au moins une caractéristique de dispersion de signal dans un système de communications dans lequel ladite dispersion de signal a une gamme prévisible de retard, ladite méthode étant **CARACTERISEE PAR** les étapes consistant à générer une séquence de test, ladite séquence de test incluant un certain nombre de symboles prédéterminés et ayant une durée au moins égale à ladite gamme de retard, transmettre ladite séquence de test dans un intervalle de temps associé, recevoir ladite séquence de test, répéter au moins une fois la séquence de test reçue pour fournir un signal de sommation représentatif de la somme de la séquence de test reçue et de la au moins une répétition, mettre en corrélation le signal de sommation pour fournir un signal de test traité, et déterminer au moins une caractéristique de ladite dispersion de signal en réponse à ladite séquence de test traitée.

15. Système de communications incluant un émetteur et un récepteur qui sont séparés par un véhicule de communications dans lequel une dispersion de signal ayant une gamme prévisible de retard peut être présente, **CARACTERISE EN CE QUE** ledit émetteur inclut un moyen (402) pour générer une séquence de test, ladite séquence de test incluant un certain nombre de symboles prédéterminés et ayant une durée au moins égale à ladite gamme de retard, et un moyen (403, 405, 406) pour transmettre ladite séquence de test dans un intervalle de temps associé, et ledit récepteur inclut un moyen (515) pour mettre en corrélation une séquence de test reçue incluant une pluralité de symboles prédéterminés survenant à un taux de symbole prédéterminé, et pour fournir une séquence de test en corrélation, un moyen (517) pour répéter au moins une fois la séquence de test en corrélation, pour fournir une séquence de test traitée représentative de la somme de la séquence de test en corrélation et de la au moins une répétition, et un moyen (519, 520, 521) sensible à la séquence de test traitée pour déterminer au moins une caractéristique de ladite dispersion de signal.

16. Système de communications comprenant un émetteur et un récepteur qui sont séparés par un véhicule de communications dans lequel une dispersion de signal ayant une gamme prévisible de retard peut être présente **CARACTERISE EN CE QUE** ledit émetteur inclut un moyen (402) pour générer une séquence de test, ladite séquence de test incluant un certain nombre de symboles prédéterminés et ayant une durée au moins égale a ladite gamme de retard, et un moyen (403, 405, 406) pour transmettre ladite séquence de test dans un intervalle de temps associé, et ledit récepteur inclut un moyen (517) pour répéter au moins une fois une séquence de test reçue, et pour fournir une représentation de signal de sommation de la somme de la séquence de test reçues et de la au moins une répétition, un moyen (515) pour mettre en corrélation le signal de sommation pour fournir une séquence de test traitée, et un moyen (519, 520, 521) sensible à la séquence de test traitée pour déterminer au moins une caractéristique de ladite dispersion de signal.
